# EUROPÄISCHE PATENTSCHRIFT

(11) **EP 2 552 658 B1**
(45) Veröffentlichungstag und Bekanntmachung des Hinweises auf die Patenterteilung: **03.06.2015**
(21) Anmeldenummer: 11716476.4
(22) Anmeldetag: 28.03.2011
(51) Int. Cl.: B26D 7/06, B26D 7/32, B65G 47/64, B65G 47/71

(54) **VORRICHTUNG UND VERFAHREN ZUR HERSTELLUNG VON SCHEIBEN-STAPELN**
DEVICE AND METHOD FOR PRODUCING STAPLES OF SLICES
SYSTÈME ET PROCÉDÉ POUR LA PRODUCTION DE PILLES DE TRANCHES

(30) Priorität: 31.03.2010 DE 102010013509
(43) Veröffentlichungstag der Anmeldung: 06.02.2013
(73) Patentinhaber: Fakler, Eugen, 88471 Laupheim (DE)
(72) Erfinder: Fakler, Eugen, 88471 Laupheim (DE)
(74) Vertreter: Riebling, Peter
(86) Internationale Anmeldenummer: PCT/EP2011/001535
(87) Internationale Veröffentlichungsnummer: WO 2011/120664

(56) Entgegenhaltungen:
- EP-A1- 0 788 986
- DE-A1- 4 204 987
- DE-U1- 8 709 053

## Beschreibung

Die Erfindung betrifft eine Vorrichtung und ein Verfahren zur Herstellung von Scheiben-Stapeln aus einzeln in Folie verpackten Scheiben, insbesondere Käsescheiben, nach dem Oberbegriff der unabhängigen Patentansprüche 1 und 10.

Derartige Vorrichtungen und Verfahren zur Herstellung von Scheiben-Stapeln aus einzeln in Folie verpackten Käsescheiben sind aus dem Stand der Technik zahlreich bekannt.

So offenbart die auf den gleichen Anmelder zurückgehende DE 4204987 A1 eine Vorrichtung zum Schneiden und Abstapeln von Produkten, die in einem Folienschlauch in Form einer Kette angeordnet sind, wobei in der Kette einzelne, Produktscheiben gebildet sind, die durch quer über die Breite des Folienschlauches verlaufende Siegelnähte voneinander abgeteilt sind, wobei ferner eine Schneideinrichtung die einzelnen, verketteten Produktscheiben im Bereich der Siegelnaht abschneidet und die einzelnen Produktscheiben auf einer Stapeleinrichtung abgelegt, in der Produktstapel gebildet werden, die einer nachgeschalteten Verpackungsmaschine zugeführt werden, wobei der Folienschlauch in die Schneideinrichtung einschiebbar ist, und dass am Ausgang der Schneideinrichtung ein Stapelmagazin angeordnet ist, das aus mindestens zwei einander gegenüberliegenden und parallel angeordneten Lamellengurten besteht, die zwischen sich einander gegenüberliegende Aufnahmeräume bilden, in welche die Produktscheibe einschiebbar ist. Die Scheiben-Stapel werden hier mittels vertikal bewegbaren rechenartigen Abholern auf ein darunter befindliches horizontales Transportband abgelegt.

Nachteil ist, dass pro Schneid- und Stapeleinheit lediglich eine einzige den Folienschlauch zuführende Folientransportstation vorgesehen ist, sowie lediglich ein einziges die abgeschnittenen Produktscheiben abführendes Produkt-Transportband, welches diese in eine nachgeschaltete Verpackungsstation fördert. Die Produktleistung ist damit relativ gering, und damit die Produktkosten relativ hoch, ebenso wie die Kosten für Herstellung und Betrieb der Vorrichtung selbst.

Eine sehr ähnliche aber konstruktiv einfachere Vorrichtung offenbart die DE 8709053 U1, die jedoch bereits vereinzelte Scheiben mittels dem horizontalem Förderer dem vertikalen Förderer aus zwei parallelen Bürstenbändern zuführt. Weiterhin wird dann der am Boden des vertikalen Förderers gebildete Scheiben-Stapel horizontal mittels Schieber einem weiteren horizontalen Förderer zugeschoben.

Nachteil ist, dass pro oberem horizontalem Förderer nur ein vertikaler Förderer und ein unterer horizontaler Förderer vorgesehen ist. Die Produktleistung ist damit relativ gering, und damit die Produktkosten relativ hoch.

Die DE 19604926 A1 sowie die EP 788986 A1 offenbaren einen Scheibenstapler für Käsescheiben, bestehend aus mindestens einem vertikalen Scheiben-Einschussband und einer horizontalen Scheiben-Transportvorrichtung mit mindestens zwei zueinander parallelen Bürstenbändern, zwischen denen die Scheiben in Richtung auf ein Drehkreuz als Scheiben-Stapel-Bildungsvorrichtung gefördert werden, welche die Scheiben-Stapel auf ein nachgeschaltetes Transportband ablegt, welches die Scheiben-Stapel einer nachgeschalteten Verpackungseinheit zuführt.

Nachteil ist, dass mindestens ein Einschussband pro Bürstenband-Paar vorgesehen ist, so das damit wiederum die Produktleistung relativ gering ist und die Produktkosten relativ hoch sind, ebenso wie die Kosten für Herstellung und Betrieb der Vorrichtung selbst.

Aufgabe der vorliegenden Erfindung ist es daher, eine einfache und kostengünstige Vorrichtung sowie ein einfaches und kostengünstiges Verfahren zur Herstellung von Scheiben-Stapeln aus einzeln in Folie verpackten Scheiben derart weiter zu bilden, dass die Produktleistung, d.h. die Anzahl der durch die Vorrichtung hindurchgeförderten Scheiben pro Zeiteinheit, wesentlich gesteigert werden kann.

Zur Lösung der gestellten Aufgabe dienen die Merkmale der unabhängigen Patentansprüche.

Wesentliche Merkmale der Vorrichtung sind, dass zwischen der Schneideinheit und der Scheiben-Zuführeinheit eine Verteilwalze vorgesehen ist, welche die durch die Schneideinheit einzeln in Folie verpackten Scheiben zunächst quer zur horizontalen Hauptförderrichtung, d.h. in Querförderrichtung, verteilt und danach mittels mindestens zwei separaten Förderbändern der Scheiben-Zuführeinheit an mindestens zwei Scheiben-Förderelemente der Scheiben-Sammel- und Stapeleinheit überführt.

Wesentliche Merkmale des Verfahrens sind, dass nach dem Verlassen der Schneideinrichtung, mehrere einzeln in Folie verpackte Scheiben zunächst auf einer Verteilwalze gesammelt und quer zur horizontalen Hauptförderrichtung, d.h. in Querförderrichtung, verteilt werden und danach parallel mehreren getrennten Transportbändern übergeben und auf diesen zu je einem der vertikalen Transportund Sammelschächte gefördert werden.

Vorteilhafte Weiterbildungen sind Gegenstand der abhängigen Patentansprüche.

Vorteil der erfindungsgemäßen Vorrichtung ist, dass die Produktleistung, d.h. die Anzahl der durch die erfindungsgemäße Vorrichtung hindurchgeförderten Produkte pro Zeiteinheit, um bis zu 50% gesteigert werden kann.

Weiterer Vorteil ist, dass die erfindungsgemäße Vorrichtung wesentlich kostengünstiger herstellbar, montierbar und betreibbar ist, da diese sehr einfach und kompakt aufgebaut ist und insbesondere eine relativ kleindimensionierte Verteilwalze mit geringer Breite und geringem Durchmesser aufweist und daher sehr kostengünstig in Herstellung und Betrieb ist, mit nur geringer aufzuwendender Rotationsenergie und damit geringem Stromverbrauch.

Die seitlichen Abstände der Förderbänder zueinander in Querrichtung sind entsprechend der auf der Verteilwalze in Querrichtung einzeln anzuordnenden Scheiben gewählt. Die Position in Hauptförderrichtung (x-Richtung) und Querrichtung (y-Richtung) der Schächte, sowie die Höhe (z-Richtung) der oberen Einwurfkanten der Schächte sind so gewählt, dass die Förderbänder nirgends kollidieren können. Bevorzugt wird, wenn die mindestens zwei Förderbänder sowie die zugehörigen mindestens zwei Schächte, längs zur horizontalen Hauptförderrichtung um einen Betrag Δx und in Querförderrichtung um einen Betrag Δy jeweils zueinander versetzt angeordnet sind. Vorteilhaft ist, wenn die Förderbänder und deren jeweilige Schächte stetig in einer Richtung (entweder plus- oder minus-Richtung von x oder y) versetzt angeordnet sind. Insbesondere weisen die mindestens zwei Schächte um einen Betrag Δz unterschiedliche obere Einwurfhöhe für die einzeln in Folie verpackten Scheiben von den mindestens zwei Förderbändern auf. Es hat sich bewährt, wenn die Förderbänder horizontal und/oder im spitzen Winkel α zwischen 5° und 15° zur Horizontalen verlaufen.

Der Schneid- und der Verteilvorgang der Scheiben mittels der Messer- und Verteilwalze erfolgt in einem kontinuierlichen Ablauf und in einer entsprechenden Produktionsgeschwindigkeit, synchronisiert mit den Förderschächten und den Förderbändern zu den Förderschächten hin und von den Förderschächten weg.

Insgesamt kann mit der erfindungsgemäßen Vorrichtung eine wesentliche Erhöhung der geförderten Scheiben-Stapel pro Zeiteinheit erfolgen, so dass eine wesentliche Verbilligung der Scheiben-Stapel erzielt werden kann, ohne dabei die Herstell-, Betriebs-, Wartungs- und Reparaturkosten der erfindungsgemäßen Vorrichtung wesentlich zu erhöhen.

Im Folgenden wird die Erfindung anhand von lediglich einen Ausführungsweg darstellende Zeichnungen näher erläutert. Hierbei gehen aus den Zeichnungen und ihrer Beschreibung weitere erfindungswesentliche Merkmale und Vorteile der Erfindung hervor.

Es zeigt:
Figur 1: Eine Seitenansicht der erfindungsgemäßen Stapeleinrichtung für Käsescheiben;
Figur 2: Eine Draufsicht der erfindungsgemäßen Stapeleinrichtung für Käsescheiben nach Figur 1;
Figur 3: Eine Vorderansicht der erfindungsgemäßen Stapeleinrichtung für Käsescheiben nach Figur 1 oder 2, entgegen der Förderrichtung gesehen, mit nur dem mittleren Ablageschacht abgebildet.

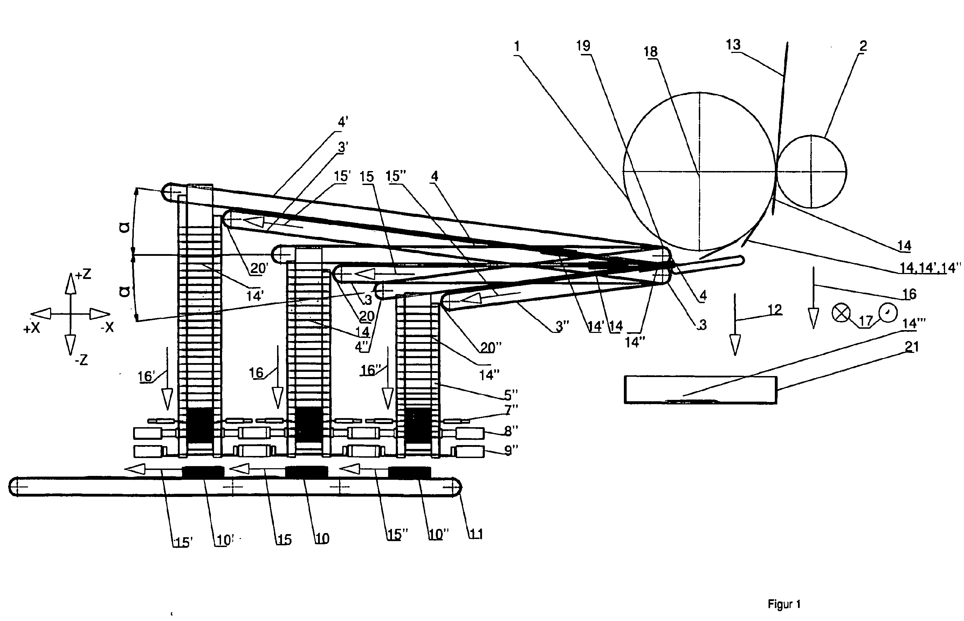

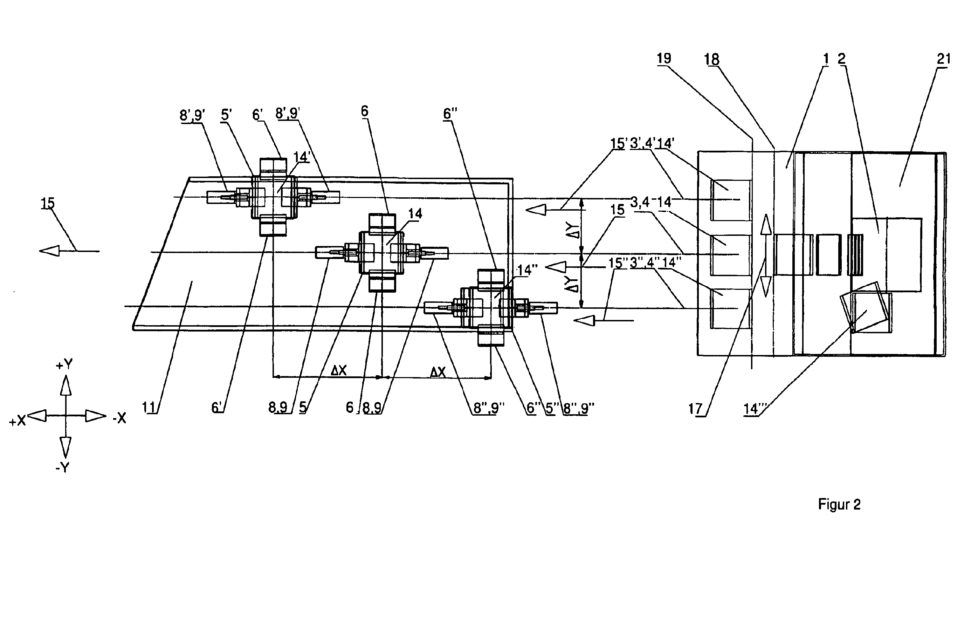

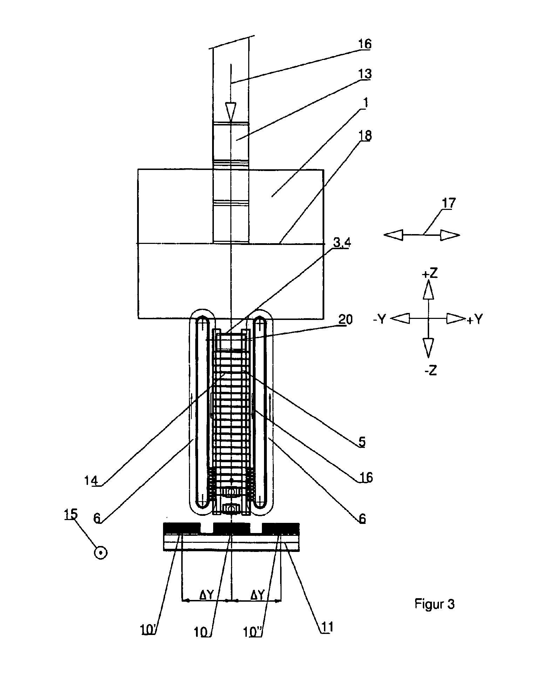

Figur 1 zeigt die erfindungsgemäße Vorrichtung zur Herstellung von Scheiben-Stapeln 10 aus einzeln in Folie verpackten Scheiben 14 in einer Seitenansicht, Figur 2 in einer Draufsicht, Figur 3 in einer Vorderansicht von links (nur mittlerer Schacht und Förderband).

Im rechten oberen Bildrand der Figur 1 läuft ein Folienband mit einzelnen Käsescheiben 13 in vertikaler Förderrichtung 16 (minus z-Richtung) zwischen eine Messerwalze 2 und eine Verteilwalze 1 nach unten ein und wird dort durch einen Messerbalken (nicht dargestellt) in eine Vielzahl von einzeln in Folie verpackten Scheiben 14 zerschnitten.

Diese einzeln in Folie verpackten Scheiben 14 werden dann auf dem Außenmantel der Verteilwalze 1 mittels Unterdruckhafteinrichtung (nicht dargestellt) angehaftet und während der Rotation der Verteilwalze 1 durch eine aus dem Stand der Technik bekannte Querverschiebevorrichtung (nicht dargestellt) in Querrichtungen 17 (y-Richtungen) gemäß Figur 2 auf der Unterseite des Außenmantels der Verteilwalze 1 verschoben, bis eine vordefinierte Anzahl von Scheiben 14 (hier drei Stück) in Querrichtung 17 (d.h. y-Richtung längs der Symmetrieachse 18 der Verteilwalze 1) nebeneinander liegen.

Natürlich können auch mehr als drei, z.B. vier, fünf oder sechs Scheiben 14 in Querrichtungen 17 (y-Richtungen) nebeneinander auf der Verteilwalze 1 angeordnet werden, mindestens aber zwei Scheiben 14.

Nach dem Querverteilen in y-Richtungen der drei Scheiben 14, 14' und 14" auf der Verteilwalze 1, werden diese durch Unterbrechen des Unterdrucks der Unterdruckhafteinrichtung auf Grund der Erdschwerkraft (Gravitation) nach vertikal unten (minus z-Richtung) und in Hauptförderrichtung 15 (x-Richtung) auf die drei zueinander vertikal im Winkel α = +/- 8° verlaufenden Förderbänder 3, 4; 3', 4'; 3", 4" geworfen. Das mittlere Förderband 3, 4 ist hierbei etwa horizontal ausgerichtet, das in Hauptförderrichtung 15 (x-Richtung) rechte Förderband 3', 4' aus der Horizontalen um plus 8° nach oben ausgerichtet, das in Hauptförderrichtung 15 (x-Richtung) linke Förderband 3", 4" aus der Horizontalen um minus 8° nach unten ausgerichtet.

Alle Förderbänder 3, 4; 3', 4'; 3", 4" starten von einer vertikalen Startebene 19 aus jeweils unterhalb der Verteilwalze 1, etwa von der Hälfte des Radius der Verteilwalze 1 aus, in Hauptförderrichtung 15 (x-Richtung) nach vorn aus der Längssymmetrieachse 18 der Verteilwalze 1 gelegen.

Jedes der Förderbänder 3, 4; 3', 4'; 3", 4" wird im übrigen durch ein unteres Transportband 3; 3'; 3", sowie ein dazu parallel oberhalb verlaufendes Oberläuferband 4; 4'; 4" gebildet, die jeweils ein Förderband-Paar bilden, zwischen dem dann die zu transportierenden Scheiben 14 eingeklemmt und gefördert werden.

Auf diesen Förderbändern 3, 4; 3', 4'; 3", 4" werden dann die Scheiben 14, 14' und 14" zu ihren zugehörigen Schächten 5, 5' und 5" gefördert und dort eingeworfen.

Jeder Schacht 5 wird - wie am besten in Figur 3 ersichtlich - durch zwei voneinander in y-Richtung beanstandete und in sich in z-Richtungen umlaufende Bürstenbänder 6 gebildet, deren Bürsten in das Innere des Schachtes 5 ragen, wobei die oben in den Schacht 5 eingeworfenen Scheiben 14 dann, zwischen den Bürsten des linken und rechten Bürstenbandes 6 getragen, und abwärts in vertikaler Hauptförderrichtung 16 in minus z-Richtung auf die Vereinzelungen 8, 9 gefördert werden, wo sie vor- und nachvereinzelt werden.

Mittels der mechanischen oder elektrischen/elektronischen Abfrage 7 im Innern jedes Schachtes 5, 5', 5" wird die Vor- und Nachvereinzelung 8, 9, sowie das Abwerfen der Scheiben-Stapel 10, 10', 10" auf das gemeinsame untere Austrageband 11 gesteuert. Diese Vor- und Nachvereinzelung 8, 9 ist hinlänglicher Stand der Technik und muss daher nicht näher beschrieben werden. Die Scheiben-Stapel 10, 10', 10" werden dann auf dem gemeinsamen unteren Austrageband 11 in x-Richtung, d.h. Hauptförderrichtung 15 aus der Vorrichtung in eine nachgeschaltete Verpackungseinheit (nicht gezeigt) gefördert.

In der Zusammenschau der Figuren 1 und 2 ist gut erkennbar, dass die Schächte 5, 5', 5" einerseits in Hauptförderrichtung 15 (x-Richtung) etwa in gleichem Längenabstand Δx voneinander oberhalb des gemeinsamen Austragebandes 11 angeordnet sind, andererseits aber in Querförderrichtung 17 (y-Richtung) ebenfalls in gleichem Breitenabstand Δy voneinander angeordnet sind. Auch die Förderbänder 3,4 und 3',4', sowie 3",4" sind in gleichem Breitenabstand Δy in Querförderrichtung 17 (y-Richtung) voneinander beabstandet. Die Schächte 5, 5', 5" sind dabei etwa in x-Richtung gleich lang und in y-Richtung etwa gleich breit, haben jedoch unterschiedliche Höhen in z-Richtung. Die Höhe z der Schächte 5, 5', 5" im Vergleich untereinander, steigt dabei mit steigendem Abstand zur Verteilwalze 1 an, so dass die oberen Einwurfkanten 20, 20', 20" der Schächte 5, 5', 5" einen Höhenversatz Δz zueinander in Hauptförderrichtung 15 (x-Richtung) aufweisen. Ausgehend vom mittleren Schacht 5, an dem das horizontale Förderband 3, 4 mündet, weist der direkt führende und direkt nachfolgende Schacht 5' und 5" einen nahezu identischen Höhenversatz Δz auf.

Die Abstände in Querrichtung 17 (y-Richtung) der Förderbänder 3,4 und 3',4', sowie 3",4" zueinander sind entsprechend der auf der Verteilwalze 1 in Querrichtung 17 einzeln anzuordnenden Scheiben 14, 14', 14" gewählt. Die Position in x-Richtung und y-Richtung der Schächte 5, 5', 5", sowie die Höhe der obere Einwurfkanten 20, 20', 20" der Schächte 5, 5', 5" in z-Richtung sind so gewählt, dass die Förderbänder 3,4 und 3',4', sowie 3",4" nirgends kollidieren.

Die Ausscheideposition 12 in Figur 1 unterhalb der Verteilwalze 1 stellt pro Förderband 3,4 und 3',4', sowie 3",4" je eine Klappe dar, die gesteuert den Zugang zu den Förderbändern 3,4 und 3',4', sowie 3",4" für schadhafte Scheiben 14"' verstellen und nach unten hin in Richtung einer Ausschuss-Auffangwanne 21 ablenken, so dass diese Ausschuss-Scheiben 14"' nicht in die Scheiben-Stapel 10, 10', 10" gelangen.

Insgesamt kann mit der vorliegenden Erfindung eine wesentliche Erhöhung der auf dem Austrageband 11 in Richtung 15 auf die Weiterverpackungsanlage weggeförderten Scheiben-Stapel 10, 10', 10" pro Zeiteinheit erfolgen, im Vergleich zu dem Stand der Technik, so dass ein Verbilligung der Scheiben-Stapel 10, 10', 10" erzielt werden kann, bei gleichzeitig einfacher und kostengünstiger Vorrichtung.

### Zeichnungslegende

- 1.: Verteilwalze
- 2.: Messerwalze
- 3.: Transportband
- 4.: Oberläuferband
- 5.: Schacht
- 6.: Bürstenriemen
- 7.: Abfrage
- 8.: Vorvereinzelung
- 9.: Hauptvereinzelung
- 10.: Produktstapel
- 11.: Austrageband
- 12.: Ausscheideposition
- 13.: einzelne Scheibe in fortlaufendem Folienband
- 14.: einzeln in Folie verpackte Scheibe (14"' Ausschuss-Scheibe)
- 15.: horizontale Hauptförderrichtung
- 16.: vertikale Hauptförderrichtung
- 17.: Querförderrichtung
- 18.: Längssymmetrieachse von 1
- 19.: vertikale Startebene der Bänder 3,4
- 20.: obere Einwurfkante von 5
- 21.: Ausschuss-Auffangwanne für Ausschuss-Scheiben 14'"
- α: = Winkel zwischen den Bändern 3,4 und 3',4', sowie 3,4 und 3",4"
- Δx: = Längenversatz in x-Richtung (horizontale Hauptförderrichtung 15)
- Δy: = Höhenversatz in y-Richtung (Querförderrichtung 17)
- Δz: = Höhenversatz in z-Richtung (vertikale Hauptförderrichtung 16)

## Patentansprüche

1. Vorrichtung zur Herstellung von Scheiben-Stapeln (10) aus einzeln in Folie verpackten Scheiben (14), insbesondere Käsescheiben, beinhaltend eine Schneideinheit (2), die die einzeln in Folie verpackten Scheiben (14) von einem Folienband mit darin seriell hintereinander befindlichen vereinzelten Scheiben (13) abschneidet, und beinhaltend eine Scheiben-Zuführeinheit (3, 4) für eine Scheiben-Sammel- und Stapeleinheit (5-9), welche ein vertikales Scheiben-Förderelement (5) und ein vertikales Scheiben-Stapelelement (8, 9) besitzt, an welche sich eine Austragseinheit (11) anschließt, welche die vom Scheiben-Stapelelement (8, 9) abgegebenen Scheiben-Stapel (10) in eine externe Umverpackungsanlage ausfördert, **dadurch gekennzeichnet, dass** zwischen der Schneideinheit (2) und der Scheiben-Zuführeinheit (3, 4) eine Verteilwalze (1) vorgesehen ist, welche die durch die Schneideinheit (2) einzeln in Folie verpackten Scheiben (14) zunächst quer zur horizontalen Hauptförderrichtung (15), d.h. in Querförderrichtung (17), verteilt und danach mittels mindestens zwei separaten Förderbändern (3, 4) der Scheiben-Zuführeinheit (3, 4) an mindestens zwei Scheiben-Förderelemente (5) der Scheiben-Sammel- und Stapeleinheit (5-9) überführt.

2. Vorrichtung nach Anspruch 1, **dadurch gekennzeichnet, dass** die mindestens zwei Förderbänder (3, 4) der Scheiben-Zuführeinheit (3, 4) sowie die zugehörigen mindestens zwei Scheiben-Förderelemente (5) der ScheibenSammel- und Stapeleinheit (5-9), seitlich quer zur horizontalen Hauptförderrichtung (15), d.h. in Querförderrichtung (17), jeweils zueinander um einen Betrag (Δy) versetzt angeordnet sind.

3. Vorrichtung nach Anspruch 2, **dadurch gekennzeichnet, dass** der Querversatz (Δy) in Querförderrichtung (17) etwas mehr als die Breite der einzeln in Folie verpackten Scheiben (14) quer zur horizontalen Hauptförderrichtung (15) beträgt, z.B. 10 - 20 % mehr als die Breite der Scheiben (14).

4. Vorrichtung nach einem der Ansprüche 1 bis 3, **dadurch gekennzeichnet, dass** die mindestens zwei Scheiben-Förderelemente (5) der ScheibenSammel- und Stapeleinheit (5-9) längs zur horizontalen Hauptförderrichtung (15) jeweils zueinander um einen Betrag (Δx) versetzt angeordnet sind.

5. Vorrichtung nach Anspruch 4, **dadurch gekennzeichnet, dass** der Längsversatz (Δx) in Hauptförderrichtung (15) etwa doppelt so groß ist als der Querversatz (Δy) in Querförderrichtung (17).

6. Vorrichtung nach einem der Ansprüche 4 oder 5, **dadurch gekennzeichnet, dass** die mindestens zwei Förderbänder (3, 4) der Scheiben-Zuführeinheit (3, 4) sowie die zugehörigen mindestens zwei Scheiben-Förderelemente (5) der Scheiben-Sammel- und Stapeleinheit (5-9), längs zur horizontalen Hauptförderrichtung (15) um einen Betrag (Δx) und dazu in Querförderrichtung (17) um einen Betrag (Δy), stetig in einer Richtung (plus- oder minus-Richtung von x oder y), jeweils zueinander versetzt angeordnet sind.

7. Vorrichtung nach einem der Ansprüche 1 bis 6, **dadurch gekennzeichnet, dass** die mindestens zwei Scheiben-Förderelemente (5) der Scheiben-Sammel- und Stapeleinheit (5-9) um einen Betrag (Δz) unterschiedliche obere Einwurfhöhe (20, 20', 20") für die einzeln in Folie verpackten Scheiben (14) von den mindestens zwei Förderbändern (3, 4) der Scheiben-Zuführeinheit (3, 4) aufweisen.

8. Vorrichtung nach einem der Ansprüche 1 bis 7, **dadurch gekennzeichnet, dass** die Förderbänder (3, 4) der Scheiben-Zuführeinheit (3, 4) horizontal und/oder im spitzen Winkel (α) zwischen 5° und 15° zur Horizontalen verlaufen.

9. Vorrichtung nach einem der Ansprüche 1 bis 8, **dadurch gekennzeichnet, dass** das Scheiben-Stapelelement (8, 9) eine Vorvereinzelung (8) und eine dieser nachgeschaltete Hauptvereinzelung (9) für die Scheiben-Stapel (10) aufweist.

10. Verfahren zur Herstellung von Scheiben-Stapeln (10) aus einzeln in Folie verpackten Scheiben (14), insbesondere Käsescheiben, wobei ein Folienband mit darin seriell hintereinander befindlichen vereinzelten Scheiben (13), einer Schneideinrichtung (2) zugeführt wird, welche die Scheiben (13) vom Folienband abschneidet und die somit erzeugten einzeln in Folie verpackten Scheiben (14) einem vertikalen Transport- und Sammelschacht (5) zugeführt werden, in welchem die in Folie verpackten Scheiben (14) vertikal nach unten zu einer Sammelvorrichtung (8, 9) gefördert werden, in welcher die Scheiben-Stapel (10) gebildet werden, welche an ein gemeinsames Austragsband (11) übergeben werden, welches die Scheiben-Stapel (10) an eine externe Umverpackungseinheit zuführt, **dadurch gekennzeichnet, dass** nach dem Verlassen der Schneideinrichtung (2), mehrere einzeln in Folie verpackte Scheiben (14) zunächst auf einer Verteilwalze (1) gesammelt und quer um einen Betrag (Δy) zur horizontalen Hauptförderrichtung (15), d.h. in Querförderrichtung (17), verteilt werden und danach parallel mehreren getrennten Transportbändern (3, 4) übergeben und auf diesen zu je einem der vertikalen Transport- und Sammelschächte (5) gefördert werden.

## Claims

1. Device for producing stacks (10) of slices from individual slices (14) individually packed in film, in particular cheese slices, containing a cutting unit (2), which cuts off the slices (14) individually packed in film from a film band with separated slices (13) located therein serially one behind the other, and containing a slice feed unit (3, 4) for a slice collecting and stacking unit (5 to 9), which has a vertical slice conveying element (5) and a vertical slice stacking element (8, 9) adjoined by a delivery unit (11), which conveys the stacks (10) of slices dispensed by the slice stack element (8, 9) into an external packaging system, **characterised in that** provided between the cutting unit (2) and the slice feed unit (3, 4) is a distributing roller (1), which firstly distributes the slices (14) individually packed in film by the cutting unit (2) transverse to the horizontal main conveying direction (15), i.e. in the transverse conveying direction (17), and thereafter transfers said slices to at least two slice conveying elements (5) of the slice collecting and stacking unit (5 to 9) by means of at least two separate conveyor belts (3, 4) of the slice feed unit (3, 4).

2. Device according to claim 1, **characterised in that** the at least two conveyor belts (3, 4) of the slice feed unit (3, 4) and the associated at least two slice conveying elements (5) of the slice collecting and stacking unit (5 to 9) are arranged offset from one another in each case by an amount (Δy) laterally transverse to the horizontal main conveying direction (15), i.e. in the transverse conveying direction (17).

3. Device according to claim 2, **characterised in that** the transverse offset (Δy) in the transverse conveying direction (17) is slightly more than the width of the slices (14) individually packed in film transverse to the horizontal main conveying direction (15), for example 10 to 20% more than the width of the slices (14).

4. Device according to any one of claims 1 to 3, **characterised in that** the at least two slice conveying elements (5) of the slice collecting and stacking unit (5 to 9) along the horizontal main conveying direction (15) are arranged offset from one another in each case by an amount (Δx).

5. Device according to claim 4, **characterised in that** the longitudinal offset (Δx) in the main conveying direction (15) is approximately twice as large as the transverse offset (Δy) in the transverse conveying direction (17).

6. Device according to either of claims 4 or 5, **characterised in that** the at least two conveyor belts (3, 4) of the slice feed unit (3, 4) and the associated at least two slice conveying elements (5) of the slice collecting and stacking unit (5 to 9) along the horizontal main conveying direction (15) are arranged offset from one another in each case by an amount (Δx) and, in addition, in the transverse conveying direction (17) by an amount (Δy), continuously in a direction (plus or minus direction of x or y).

7. Device according to any one of claims 1 to 6, **characterised in that** the at least two slice conveying elements (5) of the slice collecting and stacking unit (5 to 9) have an upper insertion height (20, 20', 20"), which is different by an amount (Δz) for the slices (14) individually packed in film, from the at least two conveyor belts (3, 4) of the slice feed unit (3, 4).

8. Device according to any one of claims 1 to 7, **characterised in that** the conveyor belts (3, 4) of the slice feed unit (3, 4) run horizontally and/or at an acute angle (α) between 5° and 15° to the horizontal.

9. Device according to any one of claims 1 to 8, **characterised in that** the slice stacking element (8, 9) has a preseparating mechanism (8) and a main separating mechanism (9) arranged downstream therefrom for the stacks (10) of slices.

10. Method for producing stacks (10) of slices from slices (14) individually packed in film, in particular cheese slices, wherein a film band with separated slices (13) located therein serially one behind the other is fed to a cutting device (2), which cuts off the slices (13) from the film band and the slices (14) individually packed in film thus produced are fed to a vertical transport and collecting shaft (5), in which the slices (14) packed in film are conveyed vertically downwards to a collecting device (8, 9), in which the stacks (10) of slices are formed, which are transferred to a common delivery belt (11), which feeds the stacks (10) of slices to an external packaging unit, **characterised in that** after leaving the cutting device (2), a plurality of slices (14) individually packed in film are initially collected on a distributing roller (1) and distributed transverse by an amount (Δy) to the horizontal main conveying direction (15), i.e. in the transverse conveying direction (17) and then transferred in parallel to a plurality of separate transport belts (3, 4) and conveyed thereon to one of the vertical transport and collecting shafts (5) in each case.

## Revendications

1. Dispositif pour la production de piles de tranches (10) formées de tranches (14), en particulier de tranches de fromage, emballées individuellement dans du film, contenant une unité de coupe (2) qui coupe les tranches (14), emballées individuellement dans du film, dans une bande de film dans laquelle se trouvent en série les unes derrière les autres des tranches séparées (13), et contenant une unité d'amenée de tranches (3, 4) pour une unité de réception et d'empilage de tranches (5-9) qui comporte un élément de transport de tranches vertical (5) et un élément d'empilage de tranches vertical (8, 9) auxquels fait suite une unité d'évacuation (11) qui amène dans une installation de suremballage extérieure les piles de tranches (10) fournies par l'élément d'empilage de tranches (8, 9), **caractérisé en ce qu'**il est prévu entre l'unité de coupe (2) et l'unité d'amenée de tranches (3, 4) un cylindre de répartition (1) qui répartit les tranches (14), emballées individuellement dans du film par l'unité de coupe (2), tout d'abord transversalement par rapport au sens de transport principal horizontal (15), c'est-à-dire dans le sens de transport transversal (17), et les fait ensuite passer, à l'aide d'au moins deux bandes de transport séparées (3, 4) de l'unité d'amenée de tranches (3, 4), sur au moins deux éléments de transport de tranches (5) de l'unité de réception et d'empilage de tranches (5-9).

2. Dispositif selon la revendication 1, **caractérisé en ce que** les deux bandes de transport (3, 4), ou plus, de l'unité d'amenée de tranches (3, 4) ainsi que les deux éléments de transport de tranches (5), ou plus, associés de l'unité de réception et d'empilage de tranches (5-9) sont décalés d'une valeur (Δy) latéralement, transversalement par rapport au sens de transport principal horizontal (15), c'est-à-dire dans le sens de transport transversal (17).

3. Dispositif selon la revendication 2, **caractérisé en ce que** le décalage transversal (Δy) dans le sens de transport transversal (17) est un peu supérieur à la largeur des tranches (14) emballées individuellement dans du film, transversalement par rapport au sens de transport principal horizontal (15), et représente par exemple 10-20 % de plus que la largeur des tranches (14).

4. Dispositif selon l'une des revendications 1 à 3, **caractérisé en ce que** les deux éléments de transport de tranches (5) de l'unité de réception et d'empilage de tranches (5-9), ou plus, sont décalés d'une valeur (Δx) longitudinalement par rapport au sens de transport principal horizontal (15)

5. Dispositif selon la revendication 4, **caractérisé en ce que** le décalage longitudinal (Δx) dans le sens de transport principal (15) est à peu près deux fois plus grand que le décalage transversal (Δy) dans le sens de transport transversal (17).

6. Dispositif selon l'une des revendications 4 ou 5, **caractérisé en ce que** les deux bandes de transport (3, 4), ou plus, de l'unité d'amenée de tranches (3, 4) ainsi que les deux éléments de transport de tranches associés (5), ou plus, de l'unité de réception et d'empilage de tranches (5-9) sont décalés longitudinalement par rapport au sens de transport principal horizontal (15) d'une valeur (Δx) et aussi, dans le sens de transport transversal (17), d'une valeur (Δy), toujours dans un sens (sens plus ou sens moins de x ou y).

7. Dispositif selon l'une des revendications 1 à 6, **caractérisé en ce que** les deux éléments de transport de tranches (5), ou plus, de l'unité de réception et d'empilage de tranches (5-9) présentent une hauteur d'introduction supérieure (20, 20', 20") différente suivant une valeur (Δz) pour les tranches (14), emballées individuellement dans du film, des deux bandes de transport (3, 4), ou plus, de l'unité d'amenée de tranches (3, 4).

8. Dispositif selon l'une des revendications 1 à 7, **caractérisé en ce que** les bandes de transport (3, 4) de l'unité d'amenée de tranches (3, 4) s'étendent à l'horizontale et/ou suivant un angle aigu (α) situé entre 5° et 15° par rapport à l'horizontale.

9. Dispositif selon l'une des revendications 1 à 8, **caractérisé en ce que** l'élément d'empilage de tranches (8, 9) comporte une séparation préalable (8) et, en aval de celle-ci, une séparation principale (9) pour les piles de tranches (10).

10. Procédé pour la production de piles de tranches (10) à partir de tranches (14), en particulier des tranches de fromage, emballées individuellement dans du film, étant précisé qu'une bande de film dans laquelle se trouvent en série les unes derrière les autres des tranches séparées (13) est amenée jusqu'à un dispositif de coupe (2) qui coupe les tranches (13) dans la bande de film, et que les tranches (14) emballées individuellement dans du film qui sont ainsi produites sont amenées jusqu'à un couloir vertical de transport et de réception (5) dans lequel les tranches (14) emballées dans du film sont transportées verticalement vers le bas jusqu'à un dispositif de réception (8, 9) dans lequel sont formées les piles de tranches (10), lesquelles sont transférées sur une bande d'évacuation commune (11) qui amène les piles de tranches (10) jusqu'à une unité de suremballage extérieure, **caractérisé en ce qu'**après avoir quitté le dispositif de coupe (2), plusieurs tranches (14) emballées individuellement dans du film sont tout d'abord reçues sur un cylindre de répartition (1) et sont réparties transversalement suivant une valeur (Δy) par rapport au sens de transport principal horizontal (15), c'est-à-dire dans le sens de transport transversal (17), et sont ensuite transférées parallèlement sur plusieurs bandes de transport séparées (3, 4) et transportées sur celles-ci jusqu'aux couloirs verticaux de transport et de réception (5) respectifs.
